# EUROPÄISCHE PATENTANMELDUNG

(11) **EP 2 284 141 A1**
(43) Veröffentlichungstag der Anmeldung: **16.02.2011**
(21) Anmeldenummer: 09167724.5
(22) Anmeldetag: 12.08.2009
(51) Int. Cl.: C05F 11/02, C05F 11/06

(54) **Verfahren und Vorrichtung zur Herstellung von mit Mineralstoffen angereicherten Kohlepartikeln**

(71) Anmelder: Leibniz-Institut für Agrartechnik Potsdam-Bornim e.V. (ATB), 14469 Potsdam (DE)
(72) Erfinder: Mumme, Jan, 14469 Potsdam (DE); Linke, Bernd, 14469 Potsdam (DE); Tölle, Rainer, 10115 Berlin (DE)
(74) Vertreter: Schubert, Klemens

(57) **Zusammenfassung**

Die vorliegende Erfindung betrifft ein Verfahren und eine Vorrichtung zur Herstellung von mit Mineralsoffen angereicherten Kohlepartikeln sowie die Verwendung der mit Mineralstoffen angereicherten Kohle.

Beschrieben wird ein Verfahren zur Herstellung von mit Mineralstoffen angereicherten Kohlepartikeln, wobei man Kohlepartikel (2) mit Mineralstoffen (4) aus einer Biogasanlage (7) belädt.

Die mit Mineralstoffen beladene Kohle dient zur Verwendung als Bodenverbesserungsmittel oder zur Einbringung von Kohlepartikeln in landwirtschaftlich genutzte Böden zu Düngungszwecken.

## Beschreibung

Die vorliegende Erfindung betrifft ein Verfahren und eine Vorrichtung zur Herstellung von mit Mineralstoffen angereicherten Kohlepartikeln sowie die Verwendung der mit Mineralstoffen angereicherten Kohle.

Durch die Einbringung von Kohlepartikeln in landwirtschaftlich genutzte Böden können vielfältige positive Effekte erzielt werden. Durch die Adsorptionswirkung der Kohlepartikel steigt die Haltefähigkeit des Bodens für Pflanzennährstoffe und Wasser (Glaser B., Haumaier L., Guggenberger G., Zech W. 2001. The Terra Preta phenomenon: a model for sustainable agriculture in the humid tropics. Naturwissenschaften, 88, 37-41). Dies ermöglicht eine bessere Versorgung des Pflanzenbestandes und damit höhere Ernteerträge. Gleichzeitig ist aufgrund der Adsorptionswirkung eine Entlastung des Grundwasserleiters u.a. von Düngemitteln, Pflanzenschutzmitteln und Schwermetallen zu erwarten. Verwendet man anstelle von fossiler Kohle eine aus biogenen Quellen technisch hergestellte Kohle (Biokohle), so kann zudem das zuvor biologisch fixierte CO₂ dauerhaft aus der Atmosphäre entfernt werden. Es entsteht eine nachhaltige C-Senke.

In Bezug auf die Herstellung von Biokohle können grundsätzlich zwei Verfahren unterschieden werden: Hydrothermale Karbonisierung (HTC) und Pyrolyse.

Für die Durchführung einer HTC sind im Stand der Technik verschiedene Verfahren bekannt. Die WO-A-2008/138637 beschreibt ein Verfahren und eine Vorrichtung zur hydrothermalen Karbonisierung (HTC) von Biomasse mit einer HTC-Anlage. In der WO-A-2008/113309 wird ein Verfahren zur nasschemischen Umwandlung von Biomasse durch hydrothermale Karbonisierung offenbart. EP-A-1 970 431 beschreibt eine Vorrichtung und ein Verfahren zur hydrothermalen Karbonisierung von Biomasse. WO-A-2008/095589 beschreibt die hydrothermale Karbonisierung von Biomasse, DE-A-102007062811 offenbart aus Biomasse hergestellte Werk- und/oder Brennstoffe und in der DE-U-202008012419 wird eine Vorrichtung zur Behandlung von Biomasse beansprucht.

Pyrolyseverfahren sind ebenfalls im Stand der Technik bekannt. So wird in der DE-A-102005030096 ein Energiewandlungssystem für feste Biomasse beschrieben. Die DE-A-3531605 offenbart einen Reaktor zur Behandlung organischer Massen und Verfahren zur Erzielung mehrerer Zwischen- und Endprodukte aus diesen Massen. Verfahren und Vorrichtung zur Speicherung sowie Gewinnung von Bioenergie wird in der DE-A-3048320 offenbart und schließlich beschreibt die DE-A-3048320 ein Verfahren und eine Vorrichtung zur kombinierten Erzeugung von hochwertigen Pyrolyseölen, Biokohle und Generatorgas aus organischen Rohstoffen.

Sowohl fossile Kohle als auch die Biokohle ist im unbehandelten Zustand nur sehr bedingt für den Einsatz im Boden geeignet. Im Wesentlichen lässt sich dies auf die hohe Sorptionsfähigkeit der Kohle zurückführen, durch die die im Boden vorhandenen Pflanzennährstoffe so weit fixiert werden können, dass das Pflanzenwachstum gestört wird.

In Bezug auf die Herstellung eines auf Kohle basierten Bodenverbesserungsmittels sind verschiedene Verfahren bekannt.

Aus WO-A-2000/037394 ist ein Verfahren bekannt, bei dem aus Braunkohle durch oxidierende und ammonisierende Behandlung ein organisches Düngemittel mit Huminstoffcharakter hergestellt wird. In der WO-A-2009/021528 wird ein fermentatives Verfahren zur Herstellung von humus- und nährstoffreichen sowie wasserspeichernden Ton-Bodensubstraten unter dem Einsatz von pyrogenem Kohlenstoff beschrieben.

Beide Druckschriften beschreiben Verfahren zur Umsetzung von Kohle und anderen kohlenstoffhaltigen Ausgangsmaterialien zu Humus oder einem humusähnlichen Material. Diese Prozesse sind mit einem erheblich höheren Aufwand verbunden als die alleinige Herbeiführung einer Sättigung der Sorptionsfähigkeit. So sind gemäß der WO-A-2000/037394 hohe Temperaturen und Drücke erforderlich. Für das Verfahren gemäß der WO-A-2009/021528 sind lange Zeiträume von zwei bis sechs Wochen vorgesehen.

Aufgabe der Erfindung ist es, eine wirtschaftlich effiziente Methode bereitzustellen, mit deren Hilfe Kohlepartikel erzeugt werden, die eine vollständige oder zumindest weitgehende Sättigung des Sorptionsvermögens aufweisen und die mit düngewirksamen Mineralien beladen sind.

Die Aufgabe wird durch ein Verfahren gemäß Anspruch 1 gelöst. Vorteilhafte Ausgestaltungen des erfindungsgemäßen Verfahrens sind in den abhängigen Ansprüchen gekennzeichnet.

Ein weiterer Gegenstand der vorliegenden Erfindung ist eine Vorrichtung zur Durchführung des Verfahrens gemäß Anspruch 11.

Ein weiterer Gegenstand der vorliegenden Erfindung ist eine mit Mineralstoffen beladene Kohle zur Verwendung als Bodenverbesserungsmittel oder zur Einbringung von Kohlepartikeln in landwirtschaftlich genutzte Böden zu Düngungszwecken.

Die Aufgabe wird erfindungsgemäß gelöst durch ein Verfahren zur Herstellung von mit Mineralstoffen angereicherten Kohlepartikeln, wobei man Kohlepartikel mit Mineralstoffen aus einer Biogasanlage belädt.

Das Verfahren wird durchgeführt, indem man die folgenden Schritte ausführt:
Einbringen der Kohlepartikel in einen Reaktionsbehälter;
in Kontakt bringen der Kohlepartikel mit den Mineralstoffen unter Beladen der Kohlepartikel mit den Mineralstoffen, wobei die Mineralstoffe aus einer Biogasanlage entnommen und in einem fluidischen Träger enthalten sind;
Austragen der beladenen Kohlepartikel aus dem Reaktionsbehälter; und
Entwässerung der beladenen Kohlepartikel unter Erhalt von beladenen und entwässerten Kohlepartikeln.

Bevorzugt ist dabei ein Verfahren, bei dem man die Kohlepartikel mit Mineralstoffen belädt, wobei man die Mineralstoffe
über eine in der Biogasanlage zirkulierende, weitgehend feststofffreie Flüssigphase oder
über eine aus dem feststoffhaltigen Fermentationsmedium der Biogasanlage separierte Flüssigphase oder über eine aus dem Fermentationsmedium der Biogasanlage erzeugte Gasphase oder
über das in der Biogasanlage gebildete Biogas oder über eine Kombination der genannten Schritte aus der Biogasanlage entnimmt.

Bevorzugt ist ferner ein Verfahren, bei dem man Kohlepartikel aus einer Kohle verwendet, die man durch einen thermochemischen Prozess aus organischen Materialien herstellt.

Besonders bevorzugt ist ein Verfahren, bei dem man die Kohle im Wesentlichen aus den organischen Reststoffen der Biogasanlage herstellt.

Bevorzugt ist auch ein Verfahren, bei dem man die Kohlepartikel vor dem Einbringen in den Reaktionsbehälter zerkleinert oder zu Briketts verpresst.

Ganz besonders bevorzugt ist ein Verfahren, bei dem man die zur Vorbehandlung, Beladung und/oder Nachbehandlung der Kohle benötigte Energie mittels der Biogasanlage erzeugt.

Bevorzugt ist auch ein Verfahren, bei dem man mineralstoffhaltige gasförmige und/oder flüssige Nebenprodukte der Kohleerzeugung dem Reaktionsbehälter und/oder der Biogasanlage zuführt.

Bevorzugt ist ferner ein Verfahren, bei dem man die Flüssigphase zwischen der Biogasanlage und dem Reaktionsbehälter austauscht.

Besonders bevorzugt ist auch ein Verfahren, bei dem man die beladenen Kohlepartikel im Reaktionsbehälter durch Zuführung eines Gases trocknet, welches Sauerstoff enthält und/oder das man vor der Zuführung erwärmt.

Gegenstand der vorliegenden Erfindung ist auch eine Vorrichtung zur Durchführung des erfindungsgemäßen Verfahrens, bestehend aus einem im Wesentlichen zylindrischen Gefäß, welches durch ein Sieb in zwei übereinander angeordnete Teilgefäße aufgeteilt ist, wobei das Teilgefäß unterhalb des Siebes zur Aufnahme der Flüssigphase vorgesehen ist und mindestens eine Zuführung für Fluide aufweist und das Teilgefäß oberhalb des Siebes zur Aufnahme der Kohlepartikel vorgesehen ist und mindestens eine Zuführung für die Kohlepartikel und mindestens eine Zuführung für Fluide aufweist.

Erfindungsgemäß bevorzugt ist eine Vorrichtung, welche für den Austrag der Kohlepartikel eine Förderschnecke aufweist oder dass diese für die Durchmischung der Suspension der Kohlepartikel eine Rührvorrichtung aufweist.

Bevorzugt ist insbesondere eine Vorrichtung, welche gasdichte Schleusen für den Ein- und Austrag der Kohle aufweist.

Ein weiterer Gegenstand der vorliegenden Erfindung ist mit Mineralstoffen beladene Kohle, erhältlich mit einem erfindungsgemäßen Verfahren, zur Verwendung als Bodenverbesserungsmittels oder zur Einbringung von Kohlepartikeln in landwirtschaftlich genutzte Böden zu Düngungszwecken.

Die Aufgabe wird erfindungsgemäß also dadurch gelöst, dass die Kohlepartikel in Kontakt gebracht werden mit gezielt aus einer Biogasanlage ausgekoppelten düngewirksamen Mineralstoffen.

Eine erfindungsgemäße Lösung beinhaltet, dass die erforderlichen Mineralstoffe sowohl aus der Fermentationsflüssigkeit der Biogasanlage als auch aus dem in der Biogasanlage gebildeten Biogas verfügbar gemacht werden, wodurch beide Stoffe gleichzeitig gereinigt werden. Eine weitere bevorzugte Lösung sieht die Erzeugung der Kohle aus den organischen Fermentationsresten der angekoppelten Biogasanlage vor. Besonders vorteilhaft kann das Verfahren gestaltet werden, wenn die Biogasanlage eine zweiphasige Betriebsweise erlaubt. Die Gestaltung der erfindungsgemäßen Vorrichtung, nämlich des Reaktionsbehälters für die Durchführung der Beladung der Kohle, kann beispielsweise eine Kohle-Suspension oder ein Kohle-Festbett aufweisen.

Fluide im Sinne der Erfindung sind gasförmige oder flüssige Medien. Dies können beispielsweise Biogas, Abgase aus Biogasanlagen, Reaktionslösungen aus Biogaslagen, Abwässer und dergleichen sein.

### Kurze Beschreibung der Figuren

Figur 1 stellt in Form eines Fließdiagramms ein Beispiel eines Verfahrens zur Herstellung von mineralstoffangereicherten Kohlepartikeln mit Ausgangskohle unbestimmter Herkunft dar;
Figur 2 stellt in Form eines Fließdiagramms ein Beispiel eines Verfahrens zur Herstellung von mineralstoffangereicherten Kohlepartikeln mit dem Einsatz von biogener Kohle (Biokohle) dar, die aus den organischen Reststoffen der Biogasanlage erzeugt wird;
Figur 3 stellt in Form eines Fließdiagramms ein Beispiel eines Verfahrens zur Herstellung von mineralstoffangereicherten Kohlepartikeln in Verbindung mit einer zweiphasigen Biogasanlage dar;
Figur 4 zeigt die Gestaltung des Reaktionsbehälters zur Beladung der Kohle mit Mineralstoffen in einer Variante mit einer Kohle-Suspension; und
Figur 5 zeigt die Gestaltung des Reaktionsbehälters zur Beladung der Kohle mit Mineralstoffen in einer Variante mit einem Kohle-Festbett.

### Ausführliche Beschreibung der Erfindung

Anhand der nachfolgenden Beschreibung und Bezug nehmend auf die beigefügten Figuren wird die Erfindung näher beschrieben. Es ist klar, dass die nachfolgend angegebenen bevorzugten Ausführungsformen den Schutzumfang der vorliegenden Erfindung nicht begrenzen, sondern dem Fachmann weitere Verfahrensvarianten ermöglichen, welche gleichfalls zum Gegenstand der vorliegenden Erfindung gehören.

Für die Durchführung des erfindungsgemäßen Verfahrens werden verschiedene Varianten in Form von Ausführungsbeispielen beschrieben.

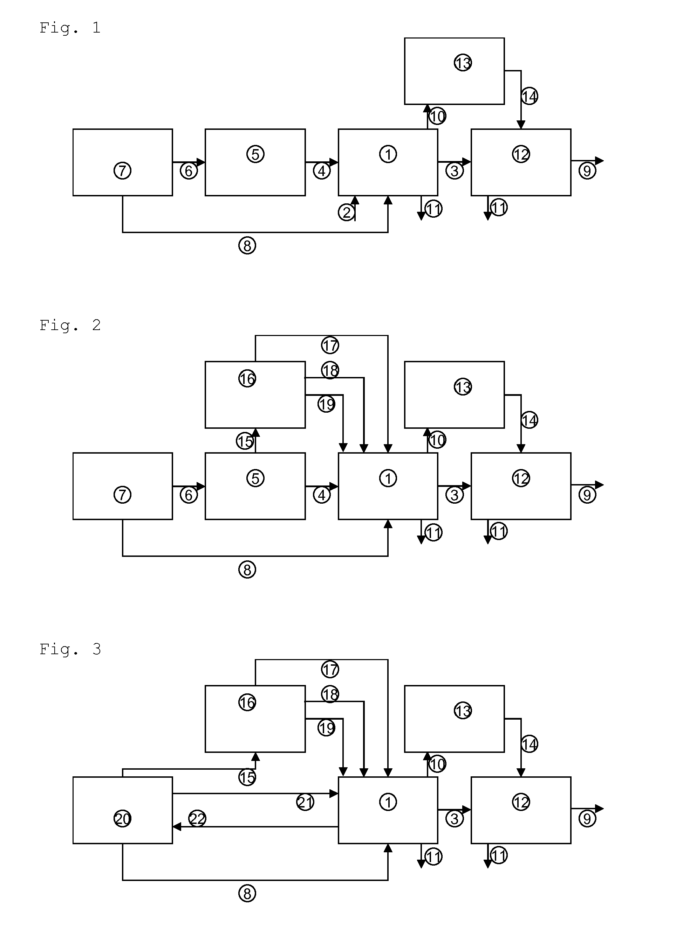

Figur 1 zeigt ein Ausführungsbeispiel der Erfindung für eine einphasige Biogasanlage und für Kohlepartikel unbestimmter Herkunft. Die Beladung der Kohlepartikel 2 mit Mineralien 4 aus einer Biogasanlage 7 erfolgt in dem Reaktionsbehälter 1.

Zur Optimierung der Sorptionseigenschaften der Kohle und der mechanischen Stabilität kann eine Vorbehandlung hilfreich sein. Hierzu gehören unter anderem die Zerkleinerung, die Verpressung zu Briketts, die Behandlung mit Chemikalien zur Aktivierung, Dotierung oder Imprägnierung der Kohle und die Entwässerung. Vorzugsweise haben die Kohlepartikel bzw. die Kohlebriketts einen Durchmesser bzw. eine Schichtdicke, die im Mittel unter 20 mm liegt.

Damit die Mineralien optimal mit der Kohle in Kontakt gebracht werden können, müssen zuvor die festen partikulären Bestandteile aus der Fermentationsflüssigkeit 6 der Biogasanlage abgetrennt werden.

Dies erfolgt durch den Phasenseparator 5. Der Phasenseparator 5 trennt die Fermentationsflüssigkeit 6 in eine feste Phase sowie eine mineralstoffhaltige, flüssige oder gasförmige Phase, wobei nur die flüssige und gasförmige Phase dem Reaktionsbehälter 1 zugeführt werden.

Die Gewinnung der flüssigen Phase kann sowohl über Siebe oder Filter als auch über eine spontane oder erzwungene Sedimentation in undurchmischten Behältern bzw. Zentrifugen erfolgen. Die Konzentration der Flüssigphase an den Elementen N, P, K beträgt in der Summe vorzugsweise mehr als 100 mg/kg, während die Konzentration an abfiltrierbaren Feststoffen vorzugsweise unter 1000 mg/kg liegt.

Für die Abscheidung einer mineralienhaltigen Gasphase weist der Phasenseparator 5 einen gasdichten Behälter auf. Zur Beschleunigung des Übergangs in die Gasphase empfiehlt sich die Anwendung geeigneter Maßnahmen im Behälter. Hierzu gehören beispielsweise die Erhöhung der Temperatur, die Absenkung des Drucks, der Einsatz von pH-Wert verändernden Chemikalien sowie die Durchleitung einer Gasphase (auch als Strippung bekannt). Die Gasphase kann Luft oder Biogas sein oder auch rezirkuliertes Gas aus dem Reaktionsbehälter 1. Während sich für die Abtrennung von gasförmigem Ammoniak-Stickstoff eine Anhebung des pH-Wertes in den basischen Bereich vorzugsweise über pH 9 empfiehlt, kann die Abtrennung von gasförmigem Schwefel in der Bindungsform H₂S am effektivsten im sauren Milieu unter pH 6 erfolgen.

Neben den gezielt aus der Fermentationsflüssigkeit abgeschiedenen Mineralstoffen können für die Beladung der Biokohle zusätzlich Mineralien aus dem in der Biogasanlage gebildeten Biogas genutzt werden. Dies kann durch Einleitung des Biogases in den Bodenbereich des Reaktionsbehälters 1 auf einfache Weise erfolgen. Durch diese Gestaltung wird gleichzeitig die in der Regel für die Biogasnutzung notwendige Biogasreinigung durchgeführt, so dass der Aufwand für eine zusätzliche Reinigung entfallen kann. Bei dieser Gestaltung ist darauf zu achten, dass es sich bei 1 um einen gasdichten Behälter handelt und dass bei der eventuellen Zuleitung einer gezielt erzeugten, mineralienhaltigen Gasphase aus 5 das Biogas 8 nicht so weit mit Fremdgasbestandteilen versetzt wird, dass der gereinigte, gasförmige Energieträger 10 ein zündfähiges Gemisch darstellt. Insbesondere ist hierbei auf den Sauerstoffgehalt zu achten, der im Gas 10 unter 2 Vol.-% betragen sollte.

Eine vorzugsweise Gestaltung des Verfahrens sieht eine Entwässerung der mit Mineralstoffen beladenen Kohlepartikel vor. Dies vermindert den Transportaufwand und ermöglicht die gleichzeitige Gewinnung von aufbereitetem Überschusswasser 11, für welches innerhalb und außerhalb der Prozesskette verschiedene Verwertungsmöglichkeiten bestehen. So kann das Überschusswasser 11 beispielsweise als Reaktions- und Transportmedium in der Biogasanlage 7 eingesetzt oder zur Bewässerung landwirtschaftlicher Kulturen genutzt werden. Die Entwässerung erfolgt vorzugsweise in zwei oder mehr Schritten. Vorzugsweise wird der Reaktionsbehälter 1 für eine Teilentwässerung genutzt. Durch eingebaute Siebe und/oder eine Sedimentation der Feststoffe kann die Flüssigphase separat entnommen werden. Die vorentwässerten, beladenen Kohlepartikel 3 werden vorzugsweise in weiteren Schritten zu einer Kohle 9 mit einem Wassergehalt von unter 30 Masse-% entwässert. Dies kann in einer separaten Entwässerungsanlage 12 mit mechanischen und thermischen Entwässerungsaggregaten erfolgen. Für die mechanische Entwässerung eignen sich Zentrifugen sowie Schnecken- oder Kammerfilterpressen. Die thermische Entwässerung wird idealerweise mit der Abwärme 14 aus einer Anlage 13 zur energetischen Nutzung des gasförmigen Energieträgers 10 betrieben. Alternativ kann die gesamte Entwässerung inkl. einer thermischen Wasserabscheidung auch in Behälter 1 erfolgen. Im Gegensatz zur ersten Variante kann bei der Alternativvariante durch die thermische Entwässerung kein kontinuierlicher Prozess in Behälter 1 etabliert werden. Um das anfallende Biogas trotzdem kontinuierlich reinigen zu können, empfiehlt sich die Verwendung von mindestens zwei parallel zu betreibenden Reaktionsbehältern 1. Anstelle einer technischen Entwässerung kann die Entwässerung auch durch solaren Einfluss in Form einer einfachen Schüttung mit oder ohne Überdachung vorgenommen werden.

In Figur 2 ist eine alternative Ausführungsform des erfindungsgemäßen Verfahrens dargestellt. Dieses Ausführungsbeispiel bezieht sich auf die Nutzung von organischen Fermentationsresten als Ausgangsmaterial der Kohle, wobei diese Fermentationsreste aus derselben Biogasanlage stammen wie die Mineralien für die Beladung der Kohle. Diese Kohle wird im Folgenden auch als Biokohle bezeichnet.

Die Nutzung von organischen Reststoffen aus einer Biogasanlage als Ausgangsmaterial der Kohle hat mehrere Vorteile.

Hierzu gehören:
- Positive Umweltbilanz: Da Biokohle aus zeitnah von Pflanzen gebundenem CO₂ gewonnen wird, kann das Gesamtverfahren eine negative CO₂-Bilanz erreichen. Dies ermöglicht eine dauerhafte Entfernung von atmosphärischem CO₂.
- Gute Verfügbarkeit: Der organische Reststoff fällt zentral an der Biogasanlage an, aus der auch die zur Kohlebeladung notwendigen Mineralien stammen.
- Höhere Wirtschaftlichkeit der Biomassenutzung: Die zusätzliche Verwertung der in der Biogasanlage nicht abgebauten organischen Substanz kann die Wirtschaftlichkeit einer rein energetischen Nutzung der zur Biogaserzeugung verwendeten Biomassen erhöhen.
- Nutzung von Synergieeffekten bei der Kohleerzeugung: Die Kohleerzeugung 16 kann verbunden sein mit dem Anfall einer Gas- und/oder Flüssigphase. Diese Phasen können im Reaktionsbehälter 1 gereinigt werden. Anfallende Überschusswärme aus der Kohleerzeugung kann zur Trocknung der beladenen Kohle verwendet werden.

Eine besonders bevorzugte Gestaltungsvariante dieses Ausführungsbeispiels ist in Fig. 2 dargestellt. Diese enthält eine Fest-/Flüssigtrennung durch eine Anlage 5. Die feste Phase wird einer Anlage zur thermochemischen Karbonisierung 16 zugeführt, während die Flüssigphase mit gelösten Mineralstoffen, wie im Beispiel gemäß Fig. 1, zur Beladung der Biokohle 17 im Reaktionsbehälter 1 dient. Neben der Biokohle 17 kann in Abhängigkeit der Gestaltung des Karbonisierungsprozesses in Anlage 16 zusätzlich eine Flüssigphase 18 und/oder eine Gasphase 19 entstehen. Beide Phasen können vorteilhaft im Reaktionsbehälter 1 gereinigt werden. Anschließend lassen sich die beiden Phasen als aufbereitetes Überschusswasser 11 bzw. gasförmiger Energieträger innerhalb oder außerhalb der Prozesskette nutzen.

Für die Karbonisierung kommen mehrere Verfahren in Betracht. Hierzu gehören die Pyrolyse und die hydrothermale Karbonisierung. Insbesondere bei der Pyrolyse kann eine vorhergehende Entwässerung der Festphase 15 hilfreich sein. Vorzugsweise sollte der Wassergehalt von 15 vor der Durchführung der Pyrolyse einen Masseanteil von unter 30 % aufweisen. Um auf entsprechende Gehalte zu kommen, empfiehlt sich die Anwendung einer thermischen Entwässerung. Hierfür kann die Anlage 12 verwendet werden, in der auch die Trocknung der beladenen Biokohle erfolgt. Vor der Zugabe der erzeugten Biokohle in Behälter 1 kann es vorteilhaft sein, die Biokohle entsprechend der Beschreibung in Ausführungsbeispiel gemäß Fig. 1 aufzubereiten. Neben den organischen Reststoffen aus einer Biogasanlage können in Anlage 16 auch weitere biogene Stoffe wie Holz, Stroh und kommunale Abfälle eingesetzt werden.

Die Entwässerung der beladenen Biokohle kann wie in Ausführungsbeispiel gemäß Fig. 1 beschrieben durchgeführt werden.

In Figur 3 ist eine weitere alternative Ausführungsform des erfindungsgemäßen Verfahrens dargestellt. Das Ausführungsbeispiel gemäß der Fig. 3 bezieht sich auf die Nutzung von organischen Fermentationsresten als Ausgangsmaterial der Kohle, wobei diese Fermentationsreste aus derselben zweiphasigen Biogasanlage stammen wie die Mineralien für die Beladung der Kohle. Die zweiphasige Betriebsweise der Biogasanlage ist **dadurch gekennzeichnet, dass** in mindestens einem der biologisch aktiven Behälter der Biogasanlage neben der umzusetzenden Biomasse eine Flüssigphase zugesetzt wird, die zuvor aus einem feststoffreichen Fermentationsmedium abgetrennt wurde. Die Auftrennung des Fermentationsmediums zur Gewinnung der Flüssigphase kann dabei im Ursprungsbehälter, einem weiteren Behälter oder einer Anlage zur maschinellen Phasentrennung erfolgen. Die zweiphasige Betriebsweise der Biogasanlage bewirkt, dass eine feststoffarme Flüssigphase im System zirkuliert, die als Transportmedium zur Verlagerung unterschiedlicher prozessrelevanter Stoffe genutzt werden kann.

Die Nutzung einer zweiphasigen Biogasanlage zur Bereitstellung der notwendigen Ausgangsmaterialien zur Herstellung der mineralstoffbeladenen Kohlepartikel hat gegenüber einer einphasigen Biogasanlage mehrere Vorteile. Hierzu gehören:
- Die Biogasanlage produziert bereits einen festen organischen Reststoff. Dieser hat gegenüber dem flüssigen Fermentationsmedium einer einphasigen Biogasanlage eine höhere Energiedichte. Der energetische Aufwand für die Aufbereitung und Kohleerzeugung kann dadurch reduziert werden.
- Die Biogasanlage produziert bereits eine feststoffarme, mineralstoffreiche Flüssigphase. Im Vergleich zum feststoffreichen Fermentationsmedium einer einphasigen Biogasanlage reduziert sich der für den Einsatz zur Kohlebeladung notwendige Separationsaufwand deutlich oder entfällt ganz.
- Die zirkulierende Flüssigphase der Biogasanlage kann durch die Reinigungswirkung der Kohle kontinuierlich um solche gelöste Stoffe entlastet werden, die das Potenzial besitzen, den Prozess der Biogasbildung zu hemmen. Neben Stoffen wie Ammoniak und Schwefelwasserstoff gehören hierzu auch verschiedene organische Zwischen- oder Endprodukte des Biogasprozesses, wie langkettige Fettsäuren und Huminsäuren.
- Der Bedarf der im Biogasprozess aktiven Mikroorganismen hinsichtlich der Versorgung mit Spurenelementen kann durch entsprechende Mineralien aus der Biokohle vollständig oder teilweise gedeckt werden. Mit Hilfe der zirkulierenden Flüssigphase können die Mineralien gezielt rückgelöst und in die Biogasanlage rückgefördert werden. Der Zukauf an Spurenelementen entfällt oder wird reduziert.
- Lösliche organische Begleitstoffe der Kohleerzeugung können über die zirkulierende Flüssigphase in die Biogasanlage verlagert werden, wo sie von den Mikroorganismen abgebaut werden und dadurch die Biogasproduktion steigern. Dieses Vorgehen ist zusätzlich hilfreich, falls es sich bei den organischen Begleitstoffen um Schadstoffe wie Phenole oder PAKs handelt.

Eine bevorzugte Ausgestaltung des erfindungsgemäßen Verfahrens ist nun in Fig. 3 dargestellt. Die bevorzugte Ausgestaltung sieht vor, dass die in der zweiphasigen Biogasanlage 20 zirkulierende Flüssigphase 21 kontinuierlich mit der Flüssigphase 22 aus dem Reaktionsbehälter 1 zur Beladung der Biokohle ausgetauscht wird. Die feste Phase 15 der Biogasanlage 20 kann direkt in eine Anlage zur Kohleerzeugung 16 überführt werden. In Abhängigkeit des Verfahrens der Karbonisierung kann jedoch die Vorschaltung einer weiteren Entwässerung hilfreich sein. Dies gilt insbesondere für die Pyrolyse als Verfahren zur Kohleerzeugung. Für die Einbindung der Gas- und Flüssigphase aus der Karbonisierung in die Beladung der Biokohle und die weitere Aufbereitung der beladenen Biokohle gelten dieselben Aussagen wie in Ausführungsformen gemäß den Figuren 2 bzw. 1. Die in die Biogasanlage 20 aus dem Reaktionsbehälter 1 zu überführende Flüssigphase 22 ist in den chemischen Eigenschaften identisch mit dem aus 1 potenziell abzuführenden Überschusswasser 11. Beide Stoffen können aus 1 entsprechend den Ausführungen gemäß der Fig. 2 abgetrennt werden. Durch die Verlagerung der Flüssigphase in die Biogasanlage können überschüssige Mengen an Flüssigkeit auch an anderer Stelle aus der Biogasanlage entnommen werden.

Die gezielte Regelung der Prozesse zu Kohleerzeugung, Beladung und Austausch der zirkulierenden Flüssigkeit erlaubt es, die Flüssigphase im Reaktionsbehälter 1 so aufzubereiten, dass in der Biogasanlage 20 stets optimale Milieubedingungen für die beteiligten Mikroorganismen bestehen. So können in 1 Hemmstoffe der Biogasbildung abgeschieden werden, notwendige Spurenelemente aus der Biokohle rückgelöst und in 20 rückverlagert werden.

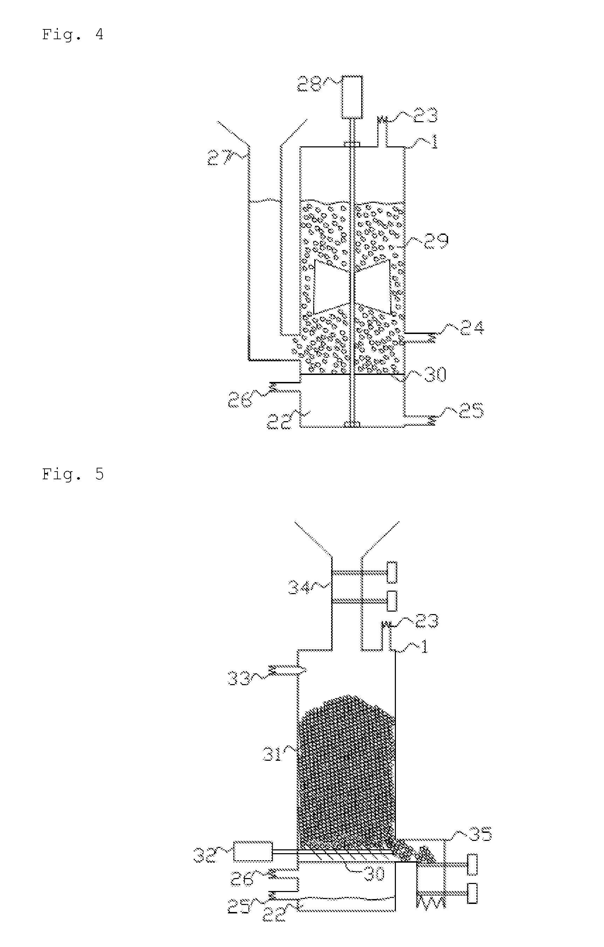

Figur 4 zeigt eine beispielhafte Gestaltung des Reaktionsbehälters 1 zur Beladung der Kohlepartikel mit Mineralstoffen. Im Behälter 1 wird eine Kohle-Suspension 29 erzeugt. Diese Variante ist vorteilhaft, wenn in erster Linie Flüssigkeiten und nicht Gase behandelt werden sollen oder größere Schwankungen hinsichtlich der Eigenschaften der Kohle sowie der zugeführten Flüssigkeiten zu erwarten sind.

Wie in Fig. 4 dargestellt, können über den Einspülschacht 27 sowohl die Kohle als auch Flüssigkeiten kontinuierlich zugeführt werden. Ist die zuzuführende Flüssigphase ausreichend frei von Feststoffen, so wird diese jedoch, wenn sie nicht zum Einspülen der Kohle benötigt wird, vorzugsweise über Stutzen 25 am Boden zugeführt. Hierdurch kann gleichzeitig die Durchmischung des Behälterinhalts gefördert werden, ohne zusätzlich Energie aufzuwenden.

Ein Sieb 30 trennt die flüssige Phase 22 des Behälterinhalts ab. Die Flüssigphase kann über Stutzen 25 entnommen werden. Ein aufkonzentriertes bzw. vorentwässertes Gemisch aus beladener Kohle und Flüssigkeit kann über Stutzen 24 ausgetragen werden. Die Gasphase wird über Stutzen 23 entnommen. Die Durchmischung des Behälterinhalts wird vorzugsweise durch einen Rührer unterstützt. Es ist jedoch auch möglich, dass die Durchmischung mit Hilfe des über Stutzen 26 eingeleiteten Gases oder der über Stutzen 25 zugeführten Flüssigkeit einen ausreichenden Effekt erzielt, insbesondere dann, wenn Teile der beiden Stoffe aus dem Reaktorkopf wieder in den Reaktorboden rückgeführt werden. Bei der Zirkulierung der Flüssigphase ist darauf zu achten, dass diese vor der Entnahme aus dem Reaktorkopf weitgehend frei von Kohlepartikeln ist. Dies kann durch Installation eines weiteren Siebs im Kopfbereich oder durch Nutzung der Schwerkraftsedimentation erfolgen.

Eine thermische Entwässerung der beladenen Kohle ist beispielsweise möglich, indem nach der vollständigen Entnahme der Flüssigphase 22 ein Gas von unten über den Stutzen 26 durch die Kohle geleitet und über Stutzen 23 wieder ausgetragen wird. Es ist dabei möglich, dass die für die thermische Entwässerung erforderliche Erwärmung des Gases durch exotherme Prozesse im Reaktionsbehälter selbst erfolgt. Ein exothermer Prozess ist auf einfache Weise durch die Zuführung von Luft zu erreichen. So ist davon auszugehen, dass die aus der Biogasanlage stammenden und in den Reaktionsbehälter überführten Gase und Flüssigkeiten Mikroorganismen enthalten, die sich auf der Kohle anlagern und in der Lage sind, leicht biologisch abbaubare Bestandteile der Kohle bei Anwesenheit von Sauerstoff in Wärme und CO₂ umzusetzen. Die Minderung der Kohle um den leicht biologisch abbaubaren Bestandteil beeinträchtigt die Effizienz des Gesamtprozesses nicht, da diese Bestandteile auch im Boden relativ schnell abgebaut werden. Die nachhaltige Funktion als Bodenverbesserungsmittel erhält die Kohle aufgrund ihrer schwer abbaubaren Bestandteile.

Außer in den Zeiten der thermischen Entwässerung kann der Reaktionsbehälter 1 kontinuierlich betrieben werden. Durch die interne Phasenseparation besteht die Möglichkeit, die Aufenthaltszeit der flüssigen Phase und der Kohle weitgehend unabhängig voneinander einzustellen. Vorzugsweise verbleibt die Kohle eine längere Zeit im Behälter 1 als die Flüssigphase. In Abhängigkeit der Beschaffenheit von Kohle und Flüssigkeit, den weiteren Prozessbedingungen und den gewünschten Ergebnissen ist zu erwarten, dass die optimale Aufenthaltszeit für die Kohle 6 bis 72 h und für die Flüssigphase 5 bis 60 min beträgt. Durch ein Umpumpen von Teilen der Gasphase im Reaktionsbehälter kann auch die Kontaktzeit von Gas und Suspension variiert werden. Ein ausreichend intensiver Kontakt sollte jedoch vorzugsweise dadurch sichergestellt werden, dass das Sieb 30 oder ein separates Düsensystem (nicht dargestellt) ein feinperliges Aufsteigen des Gases ermöglicht.

Der Prozess der Mineralstoffbeladung kann durch Optimierung der Prozessbedingungen beschleunigt werden. Neben einer homogenen Verteilung der am Prozess beteiligten Stoffe ist zu erwarten, dass auch durch höhere Temperaturen eine beschleunigte Adsorption erzielt wird. Eine Aufheizung des Behälterinhalts kann erreicht werden, indem in diesem direkt Heizaggregate eingebaut werden, aufgrund der Konvektion vorzugsweise am Boden, und/oder indem eine zuzuführende Flüssig- oder Gasphase außerhalb des Behälters 1 erwärmt wird und/oder indem noch heiße Kohle aus einer Anlage zur thermochemischen Karbonisierung eingebracht wird.

Durch gezielte Beeinflussung der Prozessbedingung ist es möglich, eine selektive Beladung der Biokohle mit bestimmten Mineralien zu erhalten. Einfluss auf die Selektivität des Prozesses hat insbesondere der pH-Wert. Der pH-Wert kann sowohl über die gezielte Bemessung der Zudosierung der unterschiedlichen zu behandelnden Flüssig- und Gasphasen beeinflusst werden als auch über die Zugabe basischer oder saurer Chemikalien. Für den Fall, dass wie in der Ausführungsform gemäß Fig. 3 eine Rückführung der Flüssigphase 22 in die Biogasanlage vorgesehen ist, kann der Einfluss des pH-Werts auf die Bindungsstärke von Kohle und Mineralien auch dazu genutzt werden, gezielt die für den Biogasprozess benötigen Spurenelemente aus der Kohle zu lösen und in die Biogasanlage rückzuverlagern.

Grundsätzlich ist es möglich, mehrere Reaktionsbehälter in Reihe oder parallel zu betreiben. Durch einen kaskadenförmigen Aufbau und/oder eine Variation der Prozessbedingungen kann die Kohle dadurch selektiv mit unterschiedlichen Mineralstoffen beladen werden.

Eine Steuerung oder Regelung des Prozesses der Kohlebeladung kann auf verschiedenen Messgrößen basieren. Hierzu zählen vor allem der pH-Wert und die elektrische Leitfähigkeit der Flüssigphase, die Rückschlüsse auf die Konzentration an Mineralien ermöglichen. Aber auch die optischen Eigenschaften der Flüssigphase können Rückschlüsse auf die Konzentration der verschiedenen Inhaltsstoffe zulassen. Um Aussagen über den Grad der Beladung der Kohle zu erhalten, können verschiedene elektrochemische Messverfahren angewendet werden. Auch die Nutzung von Sensoren zur Bestimmung der optischen Eigenschaften der Partikeloberfläche kann zielführend sein.

Eine alternative Variante der Behältergestaltung zeigt Figur 5. Erlauben die Kohlepartikel und die zu behandelnde Flüssigphase den Aufbau sowie die dauerhafte und gleichmäßige Durchströmung eines Kohle-Festbetts 31, so kann ein entsprechender Festbett-Reaktionsbehälter betrieben werden. In der in Fig. 5 dargestellten Ausführungsform wird die Flüssigphase nicht aufgestaut, so dass die Poren des Festbetts hauptsächlich gasgefüllt sind. Aufgrund des intensiveren Kontakts eignet sich diese Variante insbesondere dann, wenn die Mineralien für die Kohlebeladung im Wesentlichen über Gase zugeführt werden sollen. Um Verstopfungen des Festbetts zu vermeiden, muss auf eine weitgehende Feststofffreiheit einer ggf. zuzuführenden Flüssigphase geachtet werden.

Die unbeladenen Kohlen werden von oben über eine gasdichte Schleuse 34 zugeführt. Die beladene Biokohle wird am Behälterboden über eine Austragsschnecke 32 sowie eine gasdichte Schleuse 35 ausgetragen. Einzubringende Flüssigkeiten werden über den Stutzen 33 mit integrierter Düse gleichmäßig über den Querschnitt des Behälters appliziert. Das unterhalb der Schnecke 32 angeordnete Sieb 30 trennt wie im Reaktor gemäß Fig. 4 die Flüssigphase ab. Die Flüssigphase wird anschließend über Stutzen 25 entnommen. Das mineralstoffhaltige Gas wird über Stutzen 26 zugeleitet und nach der Durchströmung des Festbetts über Stutzen 23 wieder ausgetragen. Wie in der Ausführungsform gemäß Fig. 4 kann eine bei Bedarf unterhalb des Siebs zugeführte Flüssigkeit zur Behebung oder Prävention einer Siebverstopfung genutzt werden. Eine thermische Entwässerung der beladenen Kohle ist beispielsweise möglich, indem, entsprechend Fig. 4, Luft zugeführt wird. Diese wird in Fig. 5 von unten über Stutzen 26 durch die Kohle geleitet und über Stutzen 23 wieder ausgetragen.

Außer in den Zeiten der thermischen Entwässerung kann der Reaktionsbehälter 1 kontinuierlich betrieben werden. Der Aufbau in Fig. 5 erlaubt durch die Bemessung von Zugabe und Entnahme eine unabhängige Einstellung der Verweilzeiten von Kohle und Gas. Die Kontaktzeit der Flüssigphase im Festbett kann über ein Umpumpen verlängert werden. In Abhängigkeit der Beschaffenheit von Kohle und Gasphase, den weiteren Prozessbedingungen und den gewünschten Ergebnissen ist zu erwarten, dass die optimale Aufenthaltszeit für die Kohle 6 und 72 h und die optimale Kontaktzeit für die Gasphase 0,1 bis 30 Sekunden beträgt.

Der Prozess der Mineralstoffbeladung kann durch Optimierung der Prozessbedingungen beschleunigt werden. Neben einer gleichmäßigen Durchleitung der Gas- und Flüssigphase durch das Festbett ist zu erwarten, dass auch durch höhere Temperaturen eine beschleunigte Adsorption erreicht wird. Eine Aufheizung des Behälterinhalts kann erreicht werden, indem in diesem direkt Heizaggregate eingebaut werden und/oder indem eine zuzuführende Flüssig- oder Gasphase außerhalb des Behälters 1 erwärmt wird und/oder indem die noch heiße Kohle aus einer Anlage zur thermochemischen Karbonisierung eingebracht wird.

In Bezug auf die Optimierung und Regelung des Prozess der Biokohlebeladung treffen dieselben Aussagen zu wie in der Ausführungsform gemäß Fig. 4.

### Bezugszeichenliste

- 1: Reaktionsbehälter zur Beladung der Kohlepartikel
- 2: unbeladene Kohle unbestimmter Herkunft
- 3: beladene und vorentwässerte Kohle
- 4: Mineralstoffe im flüssigen oder gasförmigen Medium
- 5: Anlage zur Phasenseparation
- 6: Fermentationsmedium
- 7: Biogasanlage
- 8: unaufbereitetes Biogas
- 9: beladene und entwässerte Kohle
- 10: gereinigter, gasförmiger Energieträger
- 11: Überschusswasser
- 12: Anlage zur Entwässerung der beladenen Kohle
- 13: Anlage zur energetischen Biogasnutzung
- 14: Wärme
- 15: feste Phase des Fermenterinhalts
- 16: Anlage zur thermochemischen Karbonisierung
- 17: Kohle biogenen Ursprungs (Biokohle)
- 18: Flüssigphase der Karbonisierung
- 19: Gasphase der Karbonisierung
- 20: zweiphasige Biogasanlage
- 21: zirkulierende Flüssigphase aus (20)
- 22: Flüssigphase des Reaktionsbehälters
- 23: Stutzen zur Gasabführung
- 24: Stutzen zur Entnahme von beladener Kohle
- 25: Stutzen zur Abführung der flüssigen Phase des Reak- torinhalts (22)
- 26: Stutzen zur Gaszuführung
- 27: Einspülschacht für unbeladene Kohle
- 28: Rührer
- 29: Kohle-Suspension
- 30: Sieb
- 31: Kohle-Festbett
- 32: Kohle-Austragsschnecke
- 33: Zuführung von Flüssigkeit mit Düse zur horizontalen Vergleichmäßigung der Applikation
- 34: Zuführschacht für unbeladene Kohle mit gasdichter Schleuse
- 35: Austragsschacht für beladene Kohle mit gasdichter Schleuse

## Patentansprüche

1. Verfahren zur Herstellung von mit Mineralstoffen angereicherten Kohlepartikeln, wobei man Kohlepartikel (2) mit Mineralstoffen (4) aus einer Biogasanlage (7) belädt.

2. Verfahren gemäß Anspruch 1, **dadurch gekennzeichnet, dass** man die folgenden Schritte ausführt:
Einbringen der Kohlepartikel (2) in einen Reaktionsbehälter (1);
in Kontakt bringen der Kohlepartikel (2) mit den Mineralstoffen (4) unter Beladen der Kohlepartikel mit den Mineralstoffen (4), wobei die Mineralstoffe (4) aus einer Biogasanlage (7) entnommen und in einem fluidischen Träger (4, 8) enthalten sind;
Austragen der beladenen Kohlepartikel (3) aus dem Reaktionsbehälter (1); und
Entwässerung der beladenen Kohlepartikel (3) unter Erhalt von beladenen und entwässerten Kohlepartikeln (9).

3. Verfahren gemäß Anspruch 1 oder 2, **dadurch gekennzeichnet, dass** man die Kohlepartikel (2, 17) mit Mineralstoffen (4) belädt, wobei man die Mineralstoffe (4)
über eine in der Biogasanlage (7, 20) zirkulierende, weitgehend feststofffreie Flüssigphase(21, 22) oder über eine aus dem feststoffhaltigen Fermentationsmedium (6) der Biogasanlage (7, 20) separierte Flüssigphase (4) oder
über eine aus dem Fermentationsmedium der Biogasanlage (7) erzeugte Gasphase (4) oder
über das in der Biogasanlage (7, 20) gebildete Biogas (8) oder
über eine Kombination der genannten Schritte aus der Biogasanlage (7, 20) entnimmt.

4. Verfahren gemäß einem der voranstehenden Ansprüche, **dadurch gekennzeichnet, dass** man Kohlepartikel (4) aus einer Kohle verwendet, die man durch einen thermochemischen Prozess aus organischen Materialien herstellt.

5. Verfahren gemäß Anspruch 4, **dadurch gekennzeichnet, dass** man die Kohlepartikel (4) im Wesentlichen aus den organischen Reststoffen der Biogasanlage (7) herstellt.

6. Verfahren gemäß Anspruch 1 oder 2, **dadurch gekennzeichnet, dass** man die Kohlepartikel (4) vor dem Einbringen in den Reaktionsbehälter zerkleinert.

7. Verfahren gemäß Anspruch 1 oder 2, **dadurch gekennzeichnet, dass** man die Kohlepartikel (4) vor dem Einbringen in den Reaktionsbehälter zu Briketts verpresst.

8. Verfahren gemäß einem der voranstehenden Ansprüche, **dadurch gekennzeichnet, dass** man die zur Vorbehandlung, Beladung und/oder Nachbehandlung der Kohlepartikel (4) benötigte Energie mittels der Biogasanlage (7) erzeugt.

9. Verfahren gemäß einem der voranstehenden Ansprüche, **dadurch gekennzeichnet, dass** man mineralstoffhaltige gasförmige und/oder flüssige Nebenprodukte der Kohleerzeugung dem Reaktionsbehälter (1) und/oder der Biogasanlage (7) zuführt.

10. Verfahren gemäß einem der voranstehenden Ansprüche, **dadurch gekennzeichnet, dass** man die Flüssigphase zwischen der Biogasanlage (7) und dem Reaktionsbehälter (1) austauscht.

11. Verfahren gemäß Anspruch 1 oder 2, **dadurch gekennzeichnet, dass** man die beladenen Kohlepartikel (3) im Reaktionsbehälter durch Zuführung eines Gases trocknet, welches Sauerstoff enthält und/oder das man vor der Zuführung erwärmt.

12. Vorrichtung zur Durchführung des Verfahrens nach einem der voranstehenden Ansprüche, bestehend aus einem im Wesentlichen zylindrischen Gefäß (1), welches durch ein Sieb (30) in zwei übereinander angeordnete Teilgefäße aufgeteilt ist, wobei das Teilgefäß unterhalb des Siebes (30) zur Aufnahme der Flüssigphase (22) vorgesehen ist und mindestens eine Zuführung (25, 26) für Fluide aufweist und das Teilgefäß oberhalb des Siebes (30) zur Aufnahme der Kohlepartikel (2) vorgesehen ist und mindestens eine Zuführung (27, 34) für die Kohlepartikel (2) und mindestens eine Zuführung (23, 24, 33) für Fluide aufweist.

13. Vorrichtung gemäß Anspruch 12, **dadurch gekennzeichnet, dass** diese für den Austrag der Kohlepartikel (2) eine Förderschnecke aufweist oder dass diese für die Durchmischung der Suspension der Kohlepartikel (2) eine Rührvorrichtung aufweist.

14. Vorrichtung gemäß Anspruch 11, **dadurch gekennzeichnet, dass** diese gasdichte Schleusen für den Ein- und Austrag der Kohlepartikel aufweist.

15. Mit Mineralstoffen beladene Kohle, erhältlich mit einem Verfahren gemäß einem der Ansprüche 1 bis 11 zur Verwendung als Bodenverbesserungsmittel oder zur Einbringung von Kohlepartikeln in landwirtschaftlich genutzte Böden zu Düngungszwecken.
